# EUROPEAN PATENT SPECIFICATION

(11) **EP 2 760 076 B1**
(45) Date of publication and mention of the grant of the patent: **16.10.2019**
(21) Application number: 14152018.9
(22) Date of filing: 21.01.2014
(51) Int. Cl.: H01Q 1/24, H01Q 1/52, H01Q 5/00, H01Q 9/42, H01Q 21/28

(54) **Antenna and portable device having the same**
Antenne und tragbare Vorrichtung damit
Antenne et dispositif portable doté de celle-ci

(30) Priority: 23.01.2013 KR 20130007232
(43) Date of publication of application: 30.07.2014
(73) Proprietor: Samsung Electronics Co., Ltd., Gyeonggi-do 443-742 (KR)
(72) Inventor: Seo, Jaemin, 443-742 Gyeonggi-do (KR); Park, Jaesun, 443-742 Gyeonggi-do (KR); Lee, Wailing, 443-742 Gyeonggi-do (KR)
(74) Representative: HGF Limited

(56) References cited:
- EP-A1- 2 048 739
- EP-A2- 2 328 233
- EP-A2- 2 498 336
- WO-A1-2011/158057
- WO-A1-2012/066838
- US-A1- 2010 304 785
- US-A1- 2012 009 983

## Description

### BACKGROUND

### Technical Field

The present disclosure relates generally to an antenna and a portable device having the same, and more particularly, to a multi-band antenna configured for disposition in a limited space structure of the portable device.

### Description of the Related Art

In general, a portable device is an electronic device in which a user can perform wireless communication with another party while hand-held. Recent portable devices have advanced to configurations which are small, thin, and lightweight in consideration of portability, along with advances in multimedia that can perform various functions.

Particularly, there is a need to provision capability for multi-band communication in today's portable devices, to transmit/receive RF signals of various types and protocols, e.g., various multimedia environments and Internet environments, while maintaining a small size and light weight. Multi-band capability is needed for communication of high speed data signals in addition to a traditional telephony function.

A typical portable device includes a data input and output device, a speaker, a microphone, and an antenna, among other electronics. Recent designs employ an internal antenna rather than an external antenna, for convenience and reliability. Conventionally, because a telephony dedicated communication antenna and a data communication antenna were shared, even if one antenna radiator was used, the packaging problem was not a severe one. However, as multimedia related data communication increases, it is difficult to provide a multiple service with one telephony dedicated communication antenna, and thus a data communication exclusive antenna is needed. Further, as a communication method develops from a presently widely used 3G communication method to a 4G Long Term Evolution (LTE) communication method, a 4G communication antenna is separately added and thus the number of antennas mounted in the portable device increases. Thereby, antenna allocation space for each antenna in the portable device is reduced. As such, it is difficult to package multiple antennas in the constrained space within the portable device.

Accordingly, due to the ongoing desire for small, lightweight and thin portable devices with high functionality, there is a need for an antenna meeting requisite performance in as small of an internal space within the portable device as possible.

EP2498336 discloses a wireless electronic device having antenna structures based on a peripheral conductive member running around the edges of a display. Dielectric-filled gaps divide the peripheral conductive member into individual segments.

US2013/0241796 discloses an antenna device having a capacitance detection circuit connected to an antenna element electrode and operable to detect stray capacitance of the antenna element electrode using a sensing signal.

EP2328233 discloses an antenna having a first arm whose one end is connected to a feeding unit, a second arm whose one end is connected to the first arm and whose other end is connected to the ground, and a variable impedance unit provided between the ground and the other end of the first arm.

WO2011/158057 discloses a communication structure having a mobile terminal ground plane including a ground point. A primary radiator is electrically coupled to the ground point. A first antenna branch includes a first filter circuit that is coupled between a first point on the primary radiator and a first antenna port and that corresponds to a first frequency band. A second antenna branch includes a second filter circuit that is coupled between a second point on the primary radiator and a second antenna port that corresponds to a second frequency band that is different from the first frequency band.

US2012/009983 discloses an adjustable antenna system having a peripheral conductive member in an electronic device housing, at least one dielectric gap in the peripheral conductive member with which a gap width is associated, and a least one adjustable electrical component that electrically adjusts the gap width.

### SUMMARY

The present disclosure provides embodiments of an antenna apparatus and a portable device having the same, which have multiple antennas within the portable device operable at different bands and are capable of preventing a distortion phenomenon of an antenna characteristic due to interference between antennas.

In an embodiment, an antenna apparatus for a portable device includes a main antenna having a first radiator pattern; a metal surface adjacent to the main antenna configured to form a ground surface of the antenna apparatus; a printed circuit board, PCB adjacent to the metal surface; and an auxiliary antenna provided in a cut-out area of the printed circuit board; the auxiliary antenna being separated from the main antenna by the metal surface; the auxiliary antenna further comprising a radiating element having a first end configured to be connected to an RF feed point and a second opposite end; the auxiliary antenna further comprising a first group of three capacitors connected in series; wherein a first side of the first group of three capacitors connected in series is connected to the second end of the radiating element and a second side of the first group of three capacitors connected in series is connected to the ground surface; wherein the capacitance and physical structure of the first group of three series connected capacitors is configured to determine the resonance frequency band of the auxiliary antenna.

In related example, a portable device with an antenna apparatus includes a PCB having first and second cut-out areas formed adjacent to an uppermost level metal layer, and at least one lower metal layer separated from the uppermost layer by a dielectric layer. A main antenna is disposed at the first cut-out area, and has a first radiator configured for operation at a first resonant frequency. An auxiliary antenna includes at least one capacitor, the auxiliary antenna is disposed at the second cut-out area, and is configured to resonate at a second resonant frequency which is a function of the at least one capacitor. The auxiliary antenna radiates through a ground surface at a periphery of the second cut-out area.

In a related example, an antenna apparatus provided in a portable device includes a main antenna that radiates an RF (radio frequency) signal supplied from a PCB, the RF signal being transferred between the PCB and a metal pattern radiator of the main antenna disposed on a first side of the PCB. At least one capacitor is connected on one side thereof to a ground surface that at least partially encloses a second cut-out area formed in a partial area of the PCB on an opposite side of the PCB. An auxiliary antenna is supplied an RF signal from the PCB through an RF feed point, transfers the signal to the capacitor, and transmits and receives an RF wave through a path returning to a ground surface of the PCB via the at least one capacitor. The auxiliary antenna transmits and receives an RF wave of a resonant frequency band which is a function of the capacitor.

### BRIEF DESCRIPTION OF THE DRAWINGS

The aspects, features and advantages of the present disclosure will be more apparent from the following detailed description in conjunction with the accompanying drawings, in which:
FIG. 1 is a cross-sectional view illustrating a PCB for forming or mounting an antenna according to an exemplary embodiment of the present disclosure;
FIG. 2 is a plan view illustrating a structure of an antenna apparatus according to an exemplary embodiment of the present disclosure;
FIG. 3 is a diagram illustrating network analyzer data of an auxiliary antenna according to an exemplary embodiment of the present disclosure;
FIG. 4 is a plan view illustrating a multi resonant antenna as an auxiliary antenna according to an exemplary embodiment of the present disclosure;
FIG. 5 is a plan view illustrating a structure of a multi resonant antenna according to another exemplary embodiment of the present disclosure;
FIG. 6 is a plan view illustrating a structure of a multi resonant antenna according to another exemplary embodiment of the present disclosure;
FIG. 7 is a plan view illustrating a structure of a multi resonant antenna according to another exemplary embodiment of the present disclosure;
FIG. 8 is a diagram illustrating a structure of a multi resonant antenna according to another exemplary embodiment of the present disclosure; and
FIGS. 9 and 10 are graphs illustrating a simulation result according to an exemplary embodiment of the present disclosure.

### DETAILED DESCRIPTION

Hereinafter, exemplary embodiments of the present disclosure are described in detail with reference to the accompanying drawings. The same reference numbers are used throughout the drawings to refer to the same or like parts. The views in the drawings are schematic views only, and are not intended to be to scale or correctly proportioned. Detailed descriptions of well-known functions and structures incorporated herein may be omitted to avoid obscuring the subject matter of the present disclosure.

In an exemplary embodiment of the present disclosure, a portable device can be any of a variety of information, communication devices and multimedia devices such as a smart phone, a tablet personal computer (PC), a mobile communication terminal, mobile phone, a personal digital assistant (PDA), an international mobile telecommunication 2000 (IMT-2000) terminal, a code division multiple access (CDMA) terminal, a wideband code division multiple access (WCDMA) terminal, a global system for mobile communication (GSM) terminal, a general packet radio service (GPRS) terminal, an enhanced data GSM environment (EDGE) terminal, a universal mobile telecommunication service (UMTS) terminal, a digital broadcasting terminal, and an automated teller machine (ATM).

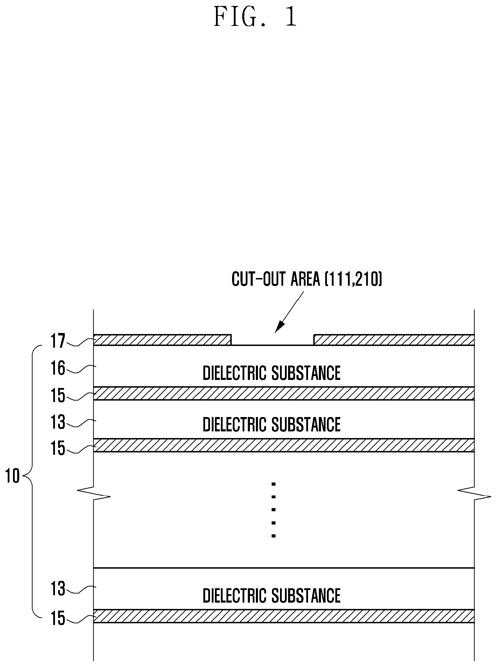

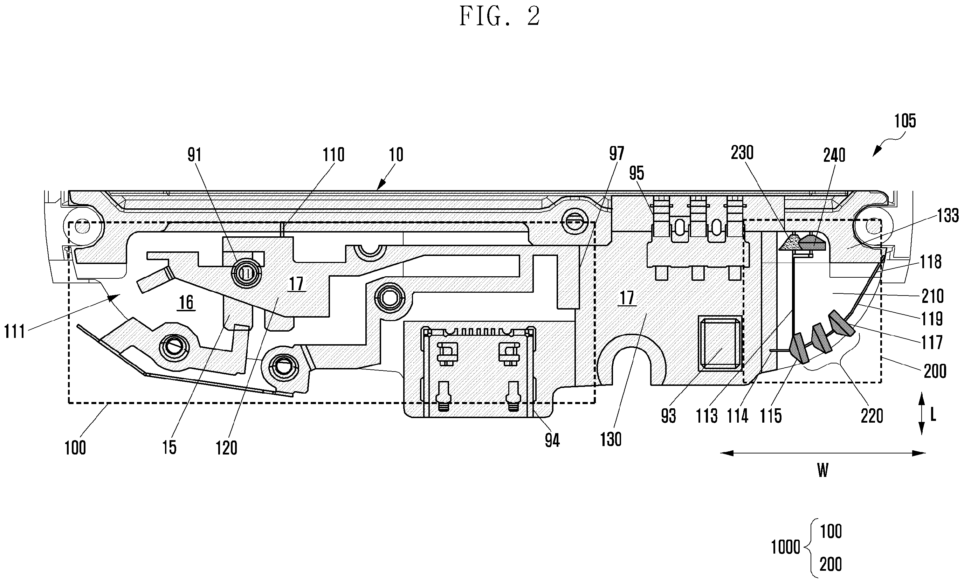

FIG. 1 is a cross-sectional view illustrating a printed circuit board (PCB) for forming or mounting an antenna apparatus according to an exemplary embodiment of the present disclosure, and FIG. 2 is a plan view illustrating a structure of an example antenna apparatus according to an exemplary embodiment of the present disclosure.

Referring to FIGs. 1 and 2, a portable device 105 according to the present exemplary embodiment includes an antenna apparatus 1000 comprised of a main (first) antenna 100 and an auxiliary (second) antenna 200.

The main antenna 100 and the auxiliary antenna 200 have different configuration types and may have different principles of radiation. Antennas 100 and 200 may be disposed in a lower end portion of a printed circuit board (PCB) provided within the portable device. For example, the antennas 100, 200 may be laterally offset in a width direction W of the portable device, as shown in FIG. 2.

The PCB 10 may be a multi-layer board, i.e., a board of a stacked structure in which a dielectric layer 13 and a metal plating layer 15 are alternately stacked in a repetitive fashion, as shown in FIG. 1. Dielectric layer 16 is directly below uppermost plating layer 17. An area in which a portion of an uppermost level metal plating layer 17 of the PCB 10 is removed is referred to as a cut-out area. Areas 111 and 210 in FIG. 2 are example cut-out areas.

The main antenna 100 is formed in the vicinity of such a cut-out area 111 to prevent radiating gain efficiency from deteriorating by a peripheral metal body. The cut-out spaces of the cut-out area provide separation between the conductive material of the antenna and neighboring metal of other components. As the metal plating layer, a metal material such as gold, silver, copper, nickel, and aluminum may be used, but from a cost viewpoint, copper is preferable.

The auxiliary antenna 200 is adjacent to the main antenna 100 in a lateral direction and is disposed in the cut-out area 210 formed on a portion of the uppermost level metal plating layer. In this example, main antenna 100 and the auxiliary antenna 200 are separated by a metal surface 130.

The metal surface 130 is an uppermost level metal plating layer of the PCB, and is referred to as an area other than the cut-out area 111 of the main antenna 100 and the cut-out area 210 of the auxiliary antenna 200. Metal surface 130 functions as a ground surface of the main antenna 100 and the auxiliary antenna 200. In the example, a right-most portion 97 of antenna 100 is electrically connected to a side of surface 130 so as to provide a shunt reactance for tuning to achieve a desired resonance. Although a solid line is shown separating the portion 97 of antenna 100 and the side of surface 130, the surface 130 may be continuous with the portion 97.

The main antenna 100 transmits and receives radio frequency (RF) waves (e.g., UHF or microwave) through a metal pattern in which power is supplied. Hereinafter, the metal pattern is referred to as a radiator pattern or just "radiator".

An RF signal is transferred from an RF circuit (not shown) of PCB 10 to radiator 120 through a power supply connection 110, and is transmitted as an electromagnetic wave from device 105 as a result of the resonance properties of antenna 100. A resonant frequency of the main antenna 100 is a function of an entire length of the radiator pattern 120, a horizontal length and a vertical length of the radiator pattern 120, and a dielectric constant of the PCB.

For example, as a length of the radiator pattern 120 is shortened, a resonant frequency of an antenna may be changed to a higher frequency, and as a length of the radiator pattern 120 is extended, a resonant frequency of an antenna may be changed to a lower frequency.

For example, the main antenna 100 may be formed as a planar inverted-F antenna (PIFA). The PIFA antenna is an antenna having a planar radiator element, as in a thin metal plate, and also having a radiator portion which is returned to PCB through a grounded portion, for the purpose of matching, thereby forming a structure resembling an inverted letter "F" (as seen at the right side portion 95).

The main antenna 100 may be alternatively or additionally be an antenna formed by etching an antenna circuit to the PCB 10, an antenna radiating through a radiator formed in a Z-axis direction of the PCB 10 (up-down direction in FIG. 1 and direction through the paper in FIG. 2) by a connection of the PCB layer of a stacked structure and a via hole 91, an antenna formed in a carrier by metal pattern plating, an antenna generated by rear fusion-bonding, an antenna formed using a flexible PCB (FPCB), laser direct structuring (LDS) antenna, and/or an antenna generated by an injection process of some other type. In the example of FIG. 2, a via hole connection 91 connects top layer metal (composed of by uppermost layer 17 metal) with a lower layer metal 15, thereby extending a radiator length of radiator pattern 120.

The main antenna 100 may be at least one of an antenna having a frequency band of 1.56GHz or more for Bluetooth (BT), a global positioning system (GPS), and WiFi and an antenna that performs communication of global system for mobile communication (GSM), code division multiple access (CDMA), and wideband code division multiple access (WCDMA).

The auxiliary antenna 200 employs at least one physical capacitor in a loop back structure, and thereby has a different structure and radiation principle than those of main antenna 100. In particular, auxiliary antenna 200 is formed within the cut-out area 210 of the uppermost level metal plating layer 17 of the PCB 10, and has a portion which connects to a ground surface 133 at a periphery of the cut-out area 210. In the cut-out area 210, at least one capacitor 220, e.g., a chip capacitor, is provided.

The auxiliary antenna 200 transmits an RF signal provided from an RF transmitter (not shown) through a transmission line of PCB 10, and when receiving an external signal, provides the receive signal to an RF receiver of PCB 10. Antenna 200 is fed from PCB 10 at a feed connector 230 (interchangeably called "RF feed point" or "power supply connector" or the like). On transmit, an RF signal supplied from the PCB 10 is transferred to a capacitor 220 through the feed connector 230, where the capacitor 220 is connected on another side (terminal or plate) thereof to the ground surface 133, thereby being part of a return path to achieve resonance at a desired frequency. (Note that capacitor 220 is exemplified in FIG. 2 as comprising three capacitors connected in series.) Auxiliary antenna 200 thereby has a driving characteristic that transmits and receives an electromagnetic wave at a resonant frequency band determined by the capacitance and physical structure of capacitor 220.

Particularly, the auxiliary antenna 200 of the present exemplary embodiment is disposed at a location separated by a predetermined distance from the main antenna 100 by the metal surface 130. Because radiation principles of the two antennas 100 and 200 are different, mutual interference between the two antennas 100 and 200 can be minimized.

That is, the main antenna 100 transmits and receives an electromagnetic wave through the radiator pattern 120 and has a resonant frequency determined by a length of the radiator pattern 120. On the other hand, auxiliary antenna 200 transmits and receives an electromagnetic wave through the ground surface 133 that encloses the cut-out area 210, and has a resonant frequency which is a function of the capacitance of at least one capacitor 220 provided in the cut-out area 210.

Capacitor 220 may receive power from the power supply connector 230 of the PCB at one side 117 (via current flow through ground surface 133), and the other side 115 thereof is connected to the ground surface 130 as illustrated. In an alternative embodiment the other side 117 may be selectively connected to the ground surface 133. That is, an optional switching circuit (not shown) may be included to selectively make a connection between the other side 117 of capacitor 220 and the ground surface 133, e.g., in between the conductive line 119 (connected to ground surface 133) and the capacitor side 117.

When a shunt element 240 is connected to the power supply unit 230, impedance of the capacitor 220 may be matched through the shunt element 240, to achieve resonance at a desired frequency. Thus, the other side 115 may not be connected to the ground surface 130. That is, although the side 115 is shown connected to ground surface 130 in FIG. 2, this connection may be broken in an alternative embodiment for matching purposes. For example, as the shunt element 240, an inductor element may be used.

In the example antenna apparatus of FIG. 2, feed connector 230 is of a type having a triangular shape. A transmission line (not shown) of the PCB 10 has a signal line and a ground point. The base of the connector 230 triangle is electrically connected to the signal line through a via or the like (not shown), and the tip of the triangle is connected to the ground point of the same potential as surface 133, as shown in FIG. 2. Auxiliary antenna 200 includes a radiating element 113, which can be in the form of a wire or conductive line, having a first end connected to the base of the triangle and an opposite end connected to the first side 115 of capacitor 220. The radiating element 113 may extend in approximately the lengthwise direction L of the portable device 105, so as to make a connection to the capacitor 220 at a lower location of the PCB 10. Shunt element 240 is shunted across the base of the triangle and the ground surface 133. Another conductive line 119 has a first end connected to the opposite side 117 of capacitor 220, and an opposite end 118 connected to the ground surface 133. The first side 115 of capacitor 220 is connected through a shorter conductive line to the ground surface 130 at a point 114.

Additional components 93, 94 and 95 of device 105, shown mounted on the top layer 17 of PCB 10, may be unrelated to the antenna apparatus, and may or may not affect the performance characteristics of the exemplary antenna apparatus.

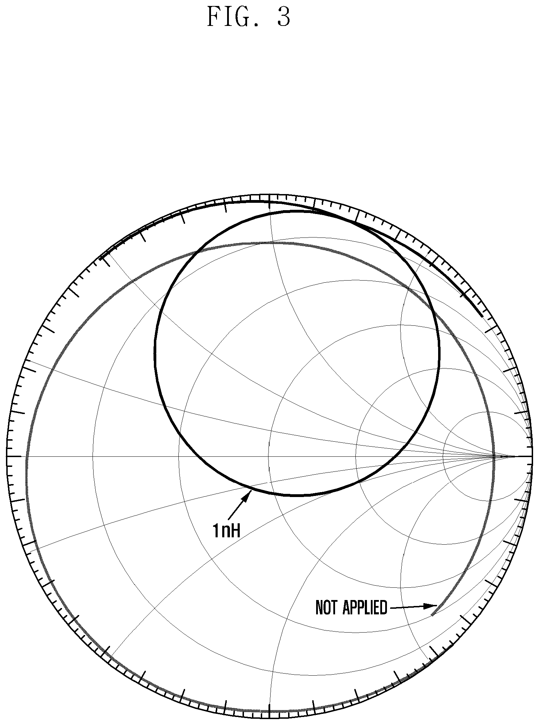

FIG. 3 illustrates network analyzer data of the auxiliary antenna 200 in which resonant impedance in a band represents a changed state by the shunt element 240 connected to the power supply unit 230.

The auxiliary antenna 200 can tune a resonant frequency of the auxiliary antenna 200 to a desired frequency range by adjusting capacitance of a plurality of capacitors 220.

In other words, a resonant frequency of a corresponding antenna can be changed according to a quantity of capacitance. For example, when a quantity of capacitance increases, a low level band resonant frequency of the auxiliary antenna 200 moves to a high end of the band. Thus, by adjusting a connection structure of a capacitor and a value of capacitance, a resonant frequency of a low level band may be adjusted.

Particularly, the auxiliary antenna 200 is disposed at an area adjacent to the main antenna 100 of the present exemplary embodiment and can embody a multi resonant antenna of a different frequency band.

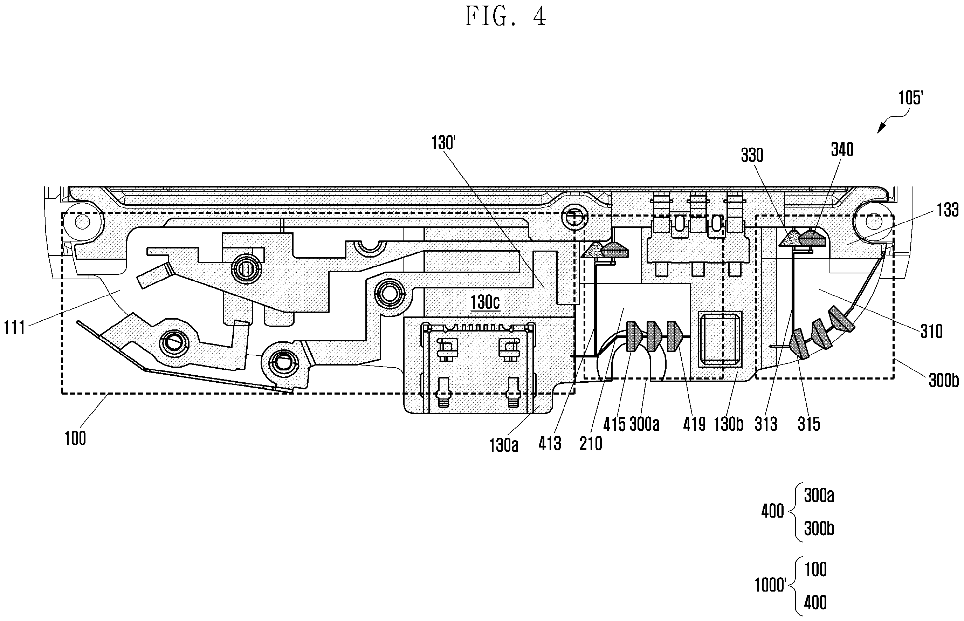

FIG. 4 is a plan view diagram illustrating another exemplary embodiment of an antenna apparatus, 1000', in which an auxiliary antenna is embodied as a multi-resonant antenna. Antenna apparatus 1000' includes main antenna 100 and an auxiliary antenna 400. Auxiliary antenna 400 according to the present exemplary embodiment may be formed with a plurality of auxiliary antennas 300a and 300b disposed at a plurality of cut-out areas 210 and 310, respectively.

Specifically, the first auxiliary antenna 300a disposed at the first cut-out area 210 and the second auxiliary antenna 300b disposed at the second cut-out area 310 are described.

The first auxiliary antenna 300a designed to resonate at a relatively low frequency band is disposed at the interior of the portable device 105', and a second auxiliary antenna 300b which resonates at a relatively high frequency band is disposed at the circumferential edge side of the portable device.

Because an antenna designed for a low frequency band should be allocated to an area wider than that of a higher frequency band antenna, it is preferable that the second auxiliary antenna 300b of a high frequency band is disposed at the circumferential edge side of the portable device, and the first auxiliary antenna 300a of a low frequency band is disposed toward the interior of the portable device.

A range of capacitors constituting the first auxiliary antenna 300a and the second auxiliary antenna 300b may be formed to approximately 0.7p-30p, and in this case, a frequency band may be in a range of a low frequency band of 400MHz to a high frequency band of 2G or more.

In the exemplary embodiment of FIG. 4, the second auxiliary antenna 300b is the same or similar in structure to the auxiliary antenna 200 of FIG. 2, thus redundant discussion thereof is omitted. Auxiliary antenna 300b includes an RF feed connector 330, shunt element 340 and radiator element 130b with the same or similar functions as in antenna 200. The first auxiliary antenna 300a may similarly include an RF feed connector and shunt element as shown, a radiator 413 connected between the feed connector and a first side 415 of at least one capacitor (three capacitors in series are exemplified). An opposite side 419 of the capacitor bank is connected to a ground surface 130b. Note that the antenna apparatus 1000' includes a ground surface 130' which differs from the ground surface 130 of FIG. 2 by omitting a central section by virtue of the cut-out 210. The ground surface 130' is considered to include three sections 130a, 130b and 130c, where section 130c is an additional section providing a ground connection for the right side portion of antenna 100. Section 130b separates the auxiliary antennas 300a, 300b. The first side 315 of the capacitor of antenna 300b is connected to the right hand side of ground section 130b. The second side 419 of the capacitor of antenna 300a is connected to the left hand side of section 130b. The first side 415 of the capacitor of antenna 300a is connected to ground section 130a through at least one short conductive line that also connects to the opposite end of radiator 413.

In the first auxiliary antenna 300a and the second auxiliary antenna 300b, because radiation is performed through the ground surface 130b or 133 enclosing each cut-out area, even if the first auxiliary antenna 300a and the second auxiliary antenna 300b are adjacently positioned, radiation interference between these two antennas can be minimized. In this case, isolation of the first auxiliary antenna 300a and the second auxiliary antenna 300b may be about -13 to -15 dB.

In this way, when embodying a multi resonant antenna using a capacitor as in the auxiliary antenna according to the present exemplary embodiment, a spatial restriction is not large and an auxiliary antenna can be additionally disposed at a periphery of the main antenna 100, which is a PCB type antenna, whereby space can be effectively used.

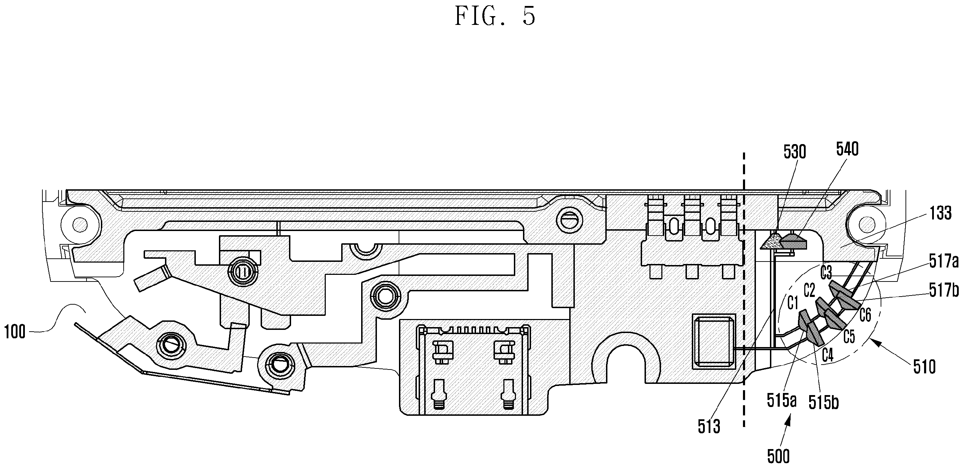

FIGS. 5 to 8 are plan views illustrating example structures of a multi resonant antenna according additional exemplary embodiments of the present disclosure.

FIG. 5 illustrates an auxiliary antenna 500 in which a resonant frequency is determined by a plurality of capacitors 510 connected in a rail structure.

The capacitor 510 of a rail structure is disposed at a cut-out area formed in a portion of an uppermost level metal plating layer of the PCB. Capacitor 510 receives RF signal power from a power supply connector 530 which may be the same or similar as RF feed connector 130 described above; and a shunt element 540 may be connected in parallel across the signal line of connector 530 and ground surface 133. A first end of a radiating element 513 is connected to the signal line of connector 530. A pair of first ends 515a, 515b of the capacitor 510 is connected to the opposite end of radiating element 513. A pair of second ends 517a, 517b of the capacitor 510 may be connected to a ground surface 133.

The capacitor 510 has different capacitances and is formed with a plurality of capacitors C1-C6 connected in parallel.

For example, the capacitor 510 is formed with a first capacitor group C1, C2, and C3 and a second capacitor group C4, C5, and C6 connected in parallel. It is preferable that capacitances of the first capacitor group C1, C2, and C3 and the second capacitor group C4, C5, and C6 are different.

A plurality of capacitors C1, C2, and C3 constituting the first capacitor group are connected in series, and capacitances of each of the capacitors C1, C2, and C3 may be the same or different.

A plurality of capacitors C4, C5, and C6 constituting the second capacitor group are connected in series, and capacitances of each of the capacitors C4, C5, and C6 may be the same or different.

For example, the first capacitor group C1, C2, and C3 may be provided to embody a resonant frequency of a low frequency band of the auxiliary antenna 500, and the second capacitor group C4, C5, and C6 may be provided to embody a resonant frequency of a high frequency band of the auxiliary antenna 500.

In this way, by a capacitor of a rail structure, i.e., a connection of a parallel structure of the first capacitor group and the second capacitor group having different capacitance, the auxiliary antenna 500 may become a multi resonant antenna having different resonant frequencies.

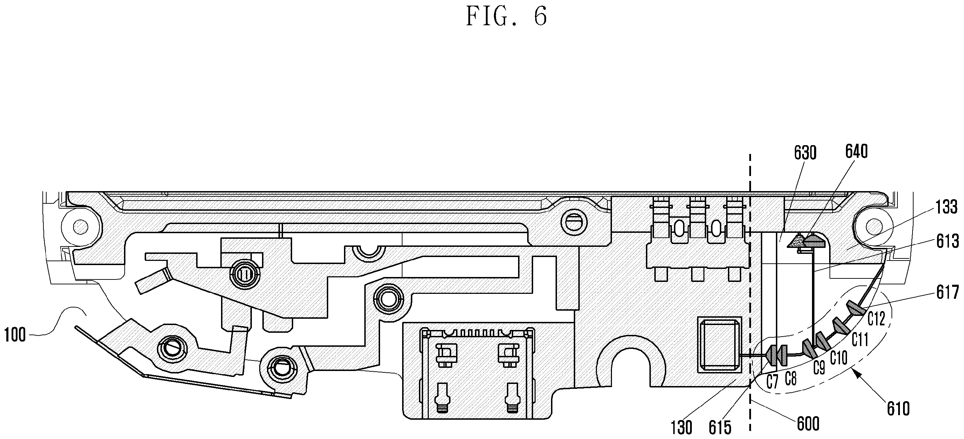

FIG. 6 illustrates an auxiliary antenna 600 in which a resonant frequency is determined by a plurality of capacitors 610 connected in parallel by a radiator element 613 of a T structure.

The plurality of capacitors 610 are disposed at a cut-out area formed in a portion of an uppermost level metal plating layer of the PCB. The plurality of capacitors 610 receive the supply of power from an RF feed connector 630which may be connected in parallel with a shunt element 640. One end 615 of the plurality of capacitors 610 may be connected to the ground surface 130, while the other end 617 is connected to the ground surface 133.

The plurality of capacitors 610 have different capacitances and are formed with capacitors C7-C12 connected in parallel. For example, the plurality of capacitors 610 may be formed with a third capacitor group C7, C8, and C9 and a fourth capacitor group C10, C11, and C12 disposed at the metal pattern 613 of a T structure.

Because a current is divided by the radiator element 613 of a T structure connected between the third capacitor group C7, C8, and C9 and the fourth capacitor group C10, C11, and C12 from the RF feed 630, the third capacitor group C7, C8, and C9 and the fourth capacitor group C10, C11, and C12 become a structure connected in parallel.

It is preferable that capacitances of the third capacitor group and the fourth capacitor group are differently formed.

A plurality of capacitors C7, C8, and C9 constituting the third capacitor group may be connected in series, and capacitances of each of the capacitors C7, C8, and C9 may be the same or different.

A plurality of capacitors C10, C11, and C12 constituting the fourth capacitor group may be connected in series, and capacitances of each of the capacitors C10, C11, and C12 may be the same or different.

For example, the third capacitor group may be provided to embody a resonant frequency of a low frequency band of the auxiliary antenna 600, and the fourth capacitor group may be provided to embody a resonant frequency of a high frequency band of the auxiliary antenna 600.

In this way, by the third capacitor group and the fourth capacitor group connected in parallel by a metal pattern of a T structure and having different capacitances, the auxiliary antenna 600 may become a multi resonant antenna having different resonant frequencies.

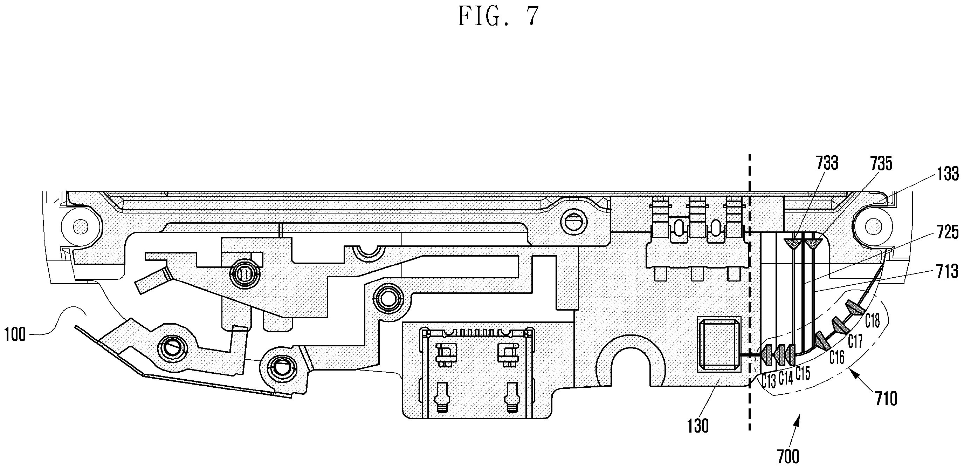

FIG. 7 illustrates an auxiliary antenna 700 in which a resonant frequency is determined by a plurality of capacitors 710 connected in parallel by a metal pattern 713 of a first modified T structure.

The plurality of capacitors 710 are disposed at a cut-out area formed in a portion of a uppermost level metal plating layer of the PCB and include a fifth capacitor group C13, C14, and C15 and a sixth capacitor group C16, C17, and C18 connected in parallel by the metal pattern 713 of a first modified T structure.

The fifth capacitor group and the sixth capacitor group supply power by different RF feeds 733 and 735 by the radiator element 713 of the first modified T structure, but are connected in parallel by sharing a ground line 725.

That is, the fifth capacitor group and the sixth capacitor group are connected in parallel by a connection of a ground line shared by the commonly connected metal pattern of a first modified T structure and another power supply line.

The fifth capacitor group and the sixth capacitor group may supply power with different signal power levels by the separated power supply units 533 and 535 or may supply power with the same signal power level.

It is preferable that capacitances of the fifth capacitor group and the sixth capacitor group are differently formed.

A plurality of capacitors C13, C14, and C15 constituting the fifth capacitor group may be connected in series, and capacitance of each of the capacitors C13, C14, and C15 may be the same or different.

A plurality of capacitors C16, C17, and C18 constituting the sixth capacitor group may be connected in series, and capacitances of each of the capacitors C16, C17, and C18 may be the same or different.

For example, the fifth capacitor group may be provided to embody a resonant frequency of a low frequency band of the auxiliary antenna 600, and the sixth capacitor group may be provided to embody a resonant frequency of a high frequency band of the auxiliary antenna 600.

In this way, the auxiliary antenna 700 may become a multi resonant antenna having different resonant frequencies by the fifth capacitor group and the sixth capacitor group that supply power by the radiator element 713 of a first modified T structure and that share a ground line.

The separated power supply connectors 733 and 735 may be replaced with a single connector that divides and applies a signal power supplied from a power supply source (not shown) of the PCB to the fifth capacitor group and the sixth capacitor group.

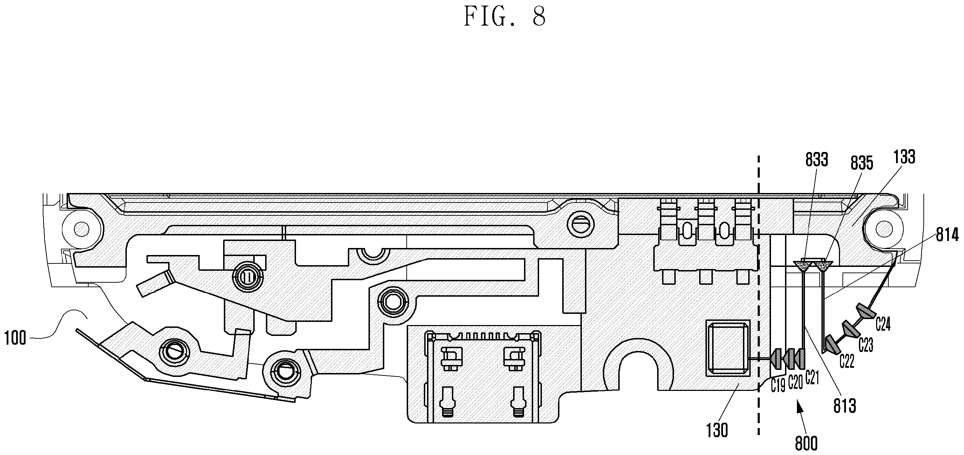

FIG. 8 illustrates an auxiliary antenna 800 in which a resonant frequency is determined by a plurality of capacitors 810 connected in parallel by radiator elements 813 and 814 of a second modified T structure.

The plurality of capacitors 810 are disposed in a cut-out area formed in a portion of a uppermost level metal plating layer of the PCB and include a seventh capacitor group C19, C20, and C21 and an eighth capacitor group C22, C23, and C24 connected by the radiators 813 and 814 of a second modified T structure.

The seventh capacitor group and the eighth capacitor group supply power by different power supply feeds 833 and 835 by the radiators 813 and 814, respectively, of the second modified T structure, and are connected to a ground surfaces 130 and 133, respectively.

That is, first ends of the seventh capacitor group and the eighth capacitor group are each connected to different power supply lines, and the opposite (second) ends thereof are each connected to the ground surface 130 or 133.

The seventh capacitor group and the eighth capacitor group may supply power with different signal power levels or may supply power with the same power levels.

It is preferable that capacitances of the seventh capacitor group and the eighth capacitor group are differently formed.

A plurality of capacitors C19, C20, and C21 constituting the seventh capacitor group may be connected in series, and capacitances of each of the capacitors C19, C20, and C21 may be the same or different.

A plurality of capacitors constituting the eighth capacitor group may be connected in series, and capacitances of each of capacitors C22, C23, and C24 may be the same or different.

For example, the seventh capacitor group may be provided to embody a resonant frequency of a low frequency band of an auxiliary antenna 800, and the eighth capacitor group may be provided to embody a resonant frequency of a high frequency band of the auxiliary antenna 800.

In this way, the auxiliary antenna 800 may become a multi resonant antenna having different resonant frequencies by means of the seventh capacitor group and the eighth capacitor group, which supply power by radiator elements 813 and 814 of a second modified T structure.

The separated power supply connectors 733 and 735 may be replaced with a combined connector that divides and applies signal power supplied from a power supply source (not shown) of the PCB to the seventh and eighth capacitor groups.

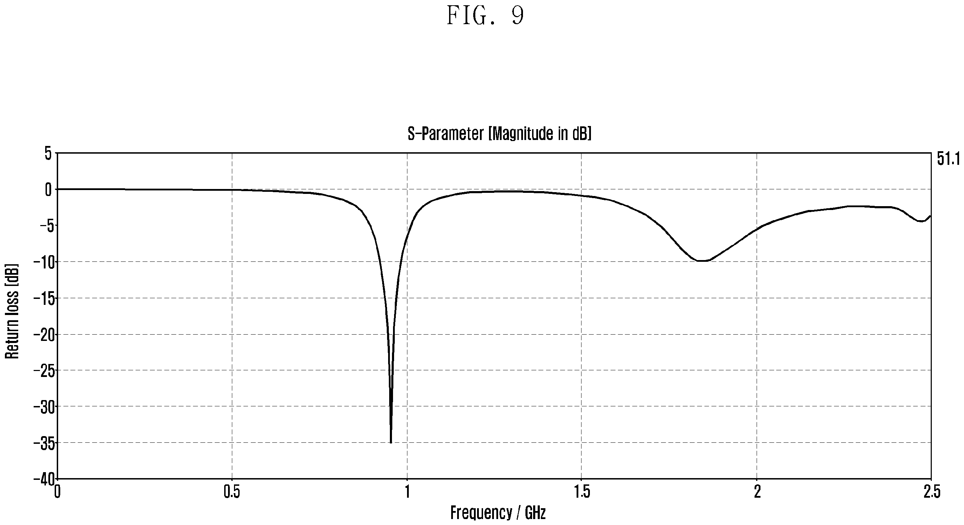

FIG. 9 illustrates a measurement result of return(reflection) loss dB using a network analyzer for the auxiliary antenna 200 that embodies a multi resonant frequency via the at least one capacitor 220 of FIG. 2. As can be seen from a measured result, the auxiliary antenna 200 according to the present exemplary embodiment may achieve a bandwidth of -5dB (bandwidth in which return loss is at least 5dB) embodies a wideband characteristic in dual bands over about 0.9GHz-2GHz.

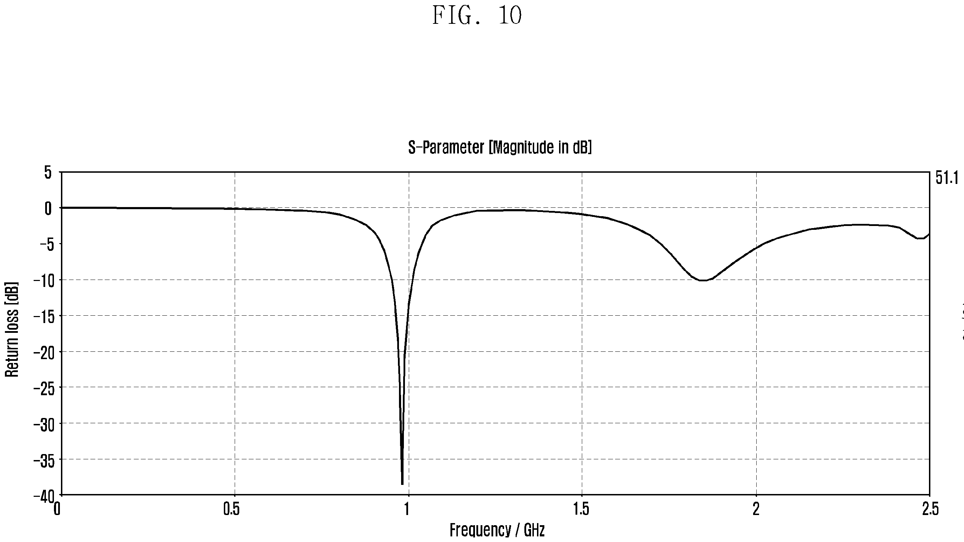

FIG. 10 illustrates a result that measures return loss dB using a network analyzer in the auxiliary antenna 500 that embodies a multi resonant frequency by the plurality of capacitors 510 connected in the rail structure of FIG. 5. As can be seen from a measured result, the auxiliary antenna 500 according to the present exemplary embodiment may achieve a bandwidth of -5dB over a wideband characteristic from about 0.9GHz-2.1GHz.

An auxiliary antenna of the present exemplary embodiment can obtain a resonant frequency desired by a user / portable device designer by adjusting capacitance via tuning a connection structure of the at least one capacitor using the above-described principles.

When disposing a multi antenna within a portable device having a small and narrow area, a configuration and disposition technology for a multi resonance of an auxiliary antenna adjacent to a main antenna of the present disclosure can enhance efficiency and allow for an antenna operating in various frequency bands.

As described above, in an antenna and a portable device having the same according to the present disclosure, by adjacently disposing an antenna in which a radiation principle and a structure are different, while preventing a distortion phenomenon of an antenna characteristic due to interference between antennas, mounting space of a multiple band antenna can be secured.

Further, according to the present disclosure, by adjusting capacitance of at least one capacitor, a resonant frequency of an antenna can be tuned to a desired frequency band.

Although exemplary embodiments of the present disclosure have been described in detail hereinabove, it should be clearly understood that many variations and modifications of the basic inventive concepts herein described, which may appear to those skilled in the art, will still fall within the scope of the present disclosure as defined in the appended claims.

## Claims

1. An antenna apparatus (1000) for a portable device (105), comprising:
a main antenna (100) having a first radiator pattern (120);
a metal surface (130) adjacent to the main antenna (100) configured to form a ground surface (133) of the antenna apparatus (1000);
a printed circuit board, PCB (10) adjacent to the metal surface (130); and
an auxiliary antenna (200, 400) provided in a cut-out area (210, 310) of the printed circuit board (10);
the auxiliary antenna (200, 400) being separated from the main antenna (100) by the metal surface (130);
the auxiliary antenna (200, 400) further comprising a radiating element (113) having a first end configured to be connected to an RF feed point and a second opposite end;
the auxiliary antenna (200) further comprising a first group of three capacitors (220) connected in series;
wherein a first side of the first group of three capacitors (220) connected in series is connected to the second end of the radiating element (113) and a second side of the first group of three capacitors connected in series is connected to the ground surface (133);
wherein the capacitance and physical structure of the first group of three series connected capacitors is configured to determine the resonance frequency band of the auxiliary antenna (200, 400).

2. The antenna apparatus of claim 1, wherein the auxiliary antenna (200, 400) radiates through at least one metal surface (133) at a periphery of the cut-out area (210).

3. The antenna apparatus of claim 1, wherein the main antenna (100) and the auxiliary antenna (200, 400) resonate at different frequency bands.

4. The antenna apparatus of claim 1, wherein the auxiliary antenna (200, 400) further comprises a shunt element (240) for impedance matching, the shunt element (240) is configured to be connected to a signal line of a power supply connector (230).

5. The antenna apparatus of claim 1, wherein the main antenna (100) and the auxiliary antenna (200, 400) are each disposed at a lower end of the PCB (10).

6. The antenna apparatus of claim 5, wherein wherein the cut-out area comprises at least a first cut-out area (210) and a second cut-out area (310), and wherein the auxiliary antenna (400) comprises at least first and second auxiliary antennas (300a, 300b) resonating at different frequency bands and disposed at respective ones of the first and second cut-out areas (210, 310) of the PCB (10).

7. The antenna apparatus of claim 6, wherein the first or second auxiliary antenna (300a, 300b) having a relatively low frequency band is disposed at a central region of the PCB (10), and the first or second auxiliary antenna (300a, 300b) having a relatively high frequency band is disposed at a circumferential edge of the PCB (10).

8. The antenna apparatus of claim 1 provided for a portable device (105),
wherein the main antenna (100) is configured to radiate an RF signal supplied from the printed circuit board (PCB) (10), the RF signal being transferred between the PCB (10) and the first radiator pattern (120) of the main antenna (100) disposed on a first side of the PCB (10); and
wherein the auxiliary antenna (200, 400) in which an RF signal supplied from the PCB (10) is transferred to the plurality of capacitors through an RF feed point (230) and that transmits and receives an RF wave through a path returning through a ground surface of the PCB (10) via the plurality of capacitors and that transmits and receives an RF wave of a resonant frequency band.

9. A portable device (105) comprising an antenna apparatus (1000) according to any of claims 1-8, wherein the printed circuit board, PCB, (10) further comprises a further cut-out area (111), wherein the cut-out area (210) and the further cut-out area (111) are formed adjacent to an uppermost level metal layer (17) of the PCB, and at least one lower metal layer (15) of the PCB separated from the uppermost layer (17) by a dielectric layer (16) of the PCB;
wherein the main antenna (100) is disposed at the further cut-out area (111), and is configured for operation at a first resonant frequency; and
wherein the auxiliary antenna (200, 400) is disposed at the cut-out area (210), the auxiliary antenna (200, 400) radiating through the ground surface (133) at a periphery of the cut-out area (210).

## Patentansprüche

1. Antennenvorrichtung (1000) für eine tragbare Vorrichtung (105), umfassend:
eine Hauptantenne (100) mit einem ersten Strahlermuster (120);
eine Metallfläche (130) anliegend an der Hauptantenne (100), die konfiguriert ist, um eine Bodenfläche (133) der Antennenvorrichtung zu bilden (1000);
eine Leiterplatte (printed circuit board, PCB) (10) anliegend an der Metallfläche (130); und
eine Hilfsantenne (200, 400), die in einem Ausschnittbereich (210, 310) der Leiterplatte (10) bereitgestellt ist;
wobei die Hilfsantenne (200, 400) durch die Metallfläche (130) von der Hauptantenne (100) getrennt ist;
die Hilfsantenne (200, 400) ferner ein Strahlungselement (113) umfasst, das ein erstes Ende, das konfiguriert ist, um mit einem HF-Zuführungspunkt verbunden zu sein, und ein zweites gegenüberliegendes Ende aufweist;
wobei die Hilfsantenne (200) ferner eine erste Gruppe von drei Kondensatoren (220) umfasst, die in Reihe geschaltet sind;
wobei eine erste Seite der ersten Gruppe von drei in Reihe geschalteten Kondensatoren (220) mit dem zweiten Ende des Strahlungselements (113) und eine zweite Seite der ersten Gruppe von drei in Reihe geschalteten Kondensatoren mit der Bodenfläche (133) verbunden ist;
wobei die Kapazität und die physikalische Struktur der ersten Gruppe von drei in Reihe geschalteten Kondensatoren konfiguriert ist, um das Resonanzfrequenzband der Hilfsantenne (200, 400) zu bestimmen.

2. Antennenvorrichtung nach Anspruch 1, wobei die Hilfsantenne (200, 400) an einem Umfang des Ausschnittbereichs (210) durch mindestens eine Metallfläche (133) strahlt.

3. Antennenvorrichtung nach Anspruch 1, wobei die Hauptantenne (100) und die Hilfsantenne (200, 400) in verschiedenen Frequenzbändern resonieren.

4. Antennenvorrichtung nach Anspruch 1, wobei die Hilfsantenne (200, 400) ferner ein Nebenschlusselement (240) zur Impedanzanpassung umfasst, wobei das Nebenschlusselement (240) konfiguriert ist, um mit einer Signalleitung eines Stromversorgungsverbinders (230) verbunden zu sein.

5. Antennenvorrichtung nach Anspruch 1, wobei die Hauptantenne (100) und die Hilfsantenne (200, 400) jeweils an einem unteren Ende der PCB (10) angeordnet sind.

6. Antennenvorrichtung nach Anspruch 5, wobei der Ausschnittbereich mindestens einen ersten Ausschnittbereich (210) und einen zweiten Ausschnittbereich (310) umfasst, und wobei die Hilfsantenne (400) mindestens eine erste und eine zweite Hilfsantenne (300a, 300b) umfasst, die in verschiedenen Frequenzbändern resonieren und an einem jeweiligen von dem ersten und dem zweiten Ausschnittbereich (210, 310) der PCB (10) angeordnet sind.

7. Antennenvorrichtung nach Anspruch 6, wobei die erste oder die zweite Hilfsantenne (300a, 300b), die ein relativ niedriges Frequenzband aufweisen, in einem mittleren Bereich der PCB (10) angeordnet ist, und die erste oder zweite Hilfsantenne (300a, 300b), die ein relativ hohes Frequenzband aufweist, an einem Umfangsrand der PCB (10) angeordnet ist.

8. Antennenvorrichtung nach Anspruch 1, die für eine tragbare Vorrichtung (105) bereitgestellt ist, wobei die Hauptantenne (100) konfiguriert ist, um ein von der Leiterplatte (printed circuit board, PCB) (10) zugeführtes HF-Signal auszustrahlen, wobei das HF-Signal zwischen der PCB (10) und dem ersten Strahlermuster (120) der Hauptantenne (100), die auf einer ersten Seite der PCB (10) angeordnet ist, übertragen wird; und
wobei die Hilfsantenne (200, 400), in der ein von der PCB (10) zugeführtes HF-Signal über einen HF-Speisepunkt (230) an die Vielzahl von Kondensatoren übertragen wird und die eine HF-Welle über einen Pfad sendet und empfängt, der über die Vielzahl von Kondensatoren durch eine Bodenfläche der PCB (10) zurückkehrt und eine HF-Welle eines Resonanzfrequenzbands sendet und empfängt.

9. Tragbare Vorrichtung (105), umfassend eine Antennenvorrichtung (1000) nach einem der Ansprüche 1 - 8, wobei die Leiterplatte (printed circuit board, PCB) (10) ferner einen weiteren Ausschnittbereich (111) umfasst, wobei der Ausschnittbereich (210) und der weitere Ausschnittbereich (111) anliegend an einer obersten Metallschicht (17) der PCB gebildet sind, und mindestens eine untere Metallschicht (15) der PCB durch eine dielektrische Schicht (16) der PCB von der obersten Schicht (17) getrennt ist;
wobei die Hauptantenne (100) in dem weiteren Ausschnittbereich (111) angeordnet ist und für den Betrieb mit einer ersten Resonanzfrequenz konfiguriert ist; und
wobei die Hilfsantenne (200, 400) an dem Ausschnittbereich (210) angeordnet ist, wobei die Hilfsantenne (200, 400) durch die Bodenfläche (133) an einem Umfang des Ausschnittbereichs (210) strahlt.

## Revendications

1. Appareil d'antenne (1000) pour dispositif portable (105), comprenant :
une antenne principale (100) possédant un premier motif de rayonnement (120) ;
une surface métallique (130) adjacente à l'antenne principale (100) conçue pour former une surface de mise à la terre (133) de l'appareil d'antenne (1000);
une carte de circuit imprimé, PCB (10) adjacente à la surface métallique (130) ;
et une antenne auxiliaire (200, 400) disposée dans une zone découpée (210, 310) de la carte de circuit imprimé (10) ;
l'antenne auxiliaire (200, 400) étant séparée de l'antenne principale (100) par la surface métallique (130) ;
l'antenne auxiliaire (200, 400) comprenant en outre un élément rayonnant (113) possédant une première extrémité conçue pour être connectée à un point d'alimentation radiofréquence (RF) et une seconde extrémité opposée ;
l'antenne auxiliaire (200) comprenant en outre un premier groupe de trois condensateurs (220) connectés en série ;
un premier côté du premier groupe de trois condensateurs (220) connectés en série étant connecté à la seconde extrémité de l'élément rayonnant (113) et un second côté du premier groupe de trois condensateurs connectés en série étant connecté à la surface de mise à la terre (133) ;
ladite capacité et ladite structure physique du premier groupe de trois condensateurs connectés en série étant conçues pour déterminer la bande de fréquence de résonance de l'antenne auxiliaire (200, 400).

2. Appareil d'antenne selon la revendication 1, ladite antenne auxiliaire (200, 400) rayonnant à travers au moins une surface métallique (133) au niveau d'une périphérie de la zone découpée (210).

3. Appareil d'antenne selon la revendication 1, ladite antenne principale (100) et ladite antenne auxiliaire (200, 400) résonant à différentes bandes de fréquence.

4. Appareil d'antenne selon la revendication 1, ladite antenne auxiliaire (200, 400) comprenant en outre un élément de shunt (240) pour l'adaptation d'impédance, l'élément de shunt (240) étant conçu pour être connecté à une ligne de signal d'un connecteur d'alimentation électrique (230).

5. Appareil d'antenne selon la revendication 1, ladite antenne principale (100) et ladite antenne auxiliaire (200, 400) étant disposées chacune au niveau d'une extrémité inférieure de la PCB (10).

6. Appareil d'antenne selon la revendication 5, ladite zone découpée comprenant au moins une première zone découpée (210) et une seconde zone découpée (310), et ladite antenne auxiliaire (400) comprenant au moins des première et seconde antennes auxiliaires (300a, 300b) résonnant à différentes bandes de fréquences et étant disposées au niveau des zones découpées respectives des première et seconde zones découpées (210, 310) de la PCB (10).

7. Appareil d'antenne selon la revendication 6, ladite première ou ladite seconde antenne auxiliaire (300a, 300b) possédant une bande de fréquence relativement basse étant disposée au niveau d'une région centrale de la PCB (10) et la première ou la seconde antenne auxiliaire (300a, 300b) possédant une bande de fréquence relativement élevée étant disposée au niveau d'un bord circonférentiel de la PCB (10).

8. Appareil d'antenne selon la revendication 1, prévu pour un dispositif portable (105), ladite antenne principale (100) étant conçue pour rayonner un signal RF fourni par la carte de circuit imprimé (PCB) (10), le signal RF étant transféré entre la PCB (10) et le premier motif de rayonnement (120) de l'antenne principale (100) disposée sur un premier côté du PCB (10) ;
et ladite antenne auxiliaire (200, 400) dans laquelle un signal RF fourni par la PCB (10) est transférée vers la pluralité de condensateurs par un point d'alimentation RF (230) et en ce qu'elle émet et reçoit une onde RF à travers un chemin revenant par une surface de mise à la terre de la PCB (10) par l'intermédiaire de la pluralité de condensateurs et émettant et recevant une onde RF d'une bande de fréquence de résonance.

9. Dispositif portable (105) comprenant un appareil d'antenne (1000) selon l'une quelconque des revendications 1 à 8, ladite carte de circuit imprimé (PCB) (10) comprenant en outre une zone découpée (111) supplémentaire, ladite zone découpée (210) et ladite zone découpée supplémentaire (111) étant formées de manière à être adjacentes à une couche métallique du niveau le plus élevé (17) de la PCB, et au moins une couche métallique inférieure (15) de la PCB séparée de la couche la plus élevée (17) par une couche diélectrique (16) de la PCB ;
ladite antenne principale (100) étant disposée au niveau de la zone découpée supplémentaire (111) et étant conçue pour fonctionner à une première fréquence de résonance ;
et ladite antenne auxiliaire (200, 400) étant disposée au niveau de la zone découpée (210), ladite antenne auxiliaire (200, 400) rayonnant à travers la surface de mise à la terre (133) au niveau de la périphérie de la zone découpée (210).
